# NEUE EUROPÄISCHE PATENTSCHRIFT

(11) **EP 0 089 497 B2**
(45) Veröffentlichungstag und Bekanntmachung des Hinweises auf die Entscheidung über den Einspruch: **27.03.1996**
(45) Hinweis auf die Patenterteilung: 29.04.1987
(21) Anmeldenummer: 83101644.9
(22) Anmeldetag: 21.02.1983
(51) Int. Cl.: C09D 175/04, C09D 5/38

(54) **Verfahren zur Herstellung eines Mehrschichtüberzuges, so überzogenes Substrat und Verwendung eines wasserverdünnbaren überzugsmittels**
Process for multilayer coating, substrate thus coated and waterborne coating composition
Procédé de laquage multicouches, substrat ainsi recouvert et composition aqueuse de laque

(30) Priorität: 19.03.1982 DE 3210051
(43) Veröffentlichungstag der Anmeldung: 28.09.1983
(73) Patentinhaber: BASF Lacke + Farben AG, D-48165 Münster-Hiltrup (DE)
(72) Erfinder: Drexler, Hermann-Josef, Dipl.-Chem.Dr., D-8702 Guntersleben (DE); Ebner, Franz, D-8702 Kist (DE); Hille, Hans-Dieter, D-5060 Bergisch Gladbach (DE); Poth, Ulrich, D-4400 Münster (DE)
(74) Vertreter: Münch, Volker, Dr.

(56) Entgegenhaltungen:
- EP-A- 0 022 452
- DE-A- 2 446 440
- DE-A- 2 557 434
- DE-A- 2 645 779
- DE-A- 2 744 544
- DE-A- 2 904 084
- DE-A- 2 926 584
- US-A- 4 147 679
- US-A- 4 203 883
- Angewandte Chemie, 82 (1970) S. 53-63
- Die Angewandte Makromolekulare Chemie, 98 (1981) S. 133 ff.
- Progress in organic coatings, 9 (1981) S. 281, 328, 329
- Ullmanns Encyklopädie der technischen Chemie, 4. Auflage, Band 15 (1978) S. 636, 637, 658, 659, 708, 709

## Beschreibung

Die Erfindung betrifft ein Verfahren zur Herstellung eines Mehrschichtüberzuges, bei dem auf ein Substrat als Basisschicht ein wasserverdünnbares Überzugsmittel aufgebracht wird, das Pigmente, mindestens ein filmbildendes Bindemittel und gegebenenfalls Verlaufsmittel, Thixotropierungsmittel, Füllstoffe, organische Lösungsmittel und andere übliche Hilfsstoffe enthält, darauf nach einer Ablüftzeit als Deckschicht ein transparentes Überzugsmittel aufgebracht und anschließend das beschichtete Substrat erhitzt wird.

Insbesondere bei der Automobillackierung, aber auch in anderen Bereichen in denen man Überzüge mit Insbesondere bei der Automobillackierung, aber auch in anderen Bereichen in denen man Oberzüge mit guter dekorativer Wirkung und gleichzeitig einen guten Korrosionsschutz wünscht ist es bekannt, Substrate mit mehreren, übereinander angeordneten Überzugsschichten zu versehen. Hierbei wird zunächst ein pigmentiertes Überzugsmittel aufgebracht, und anschließend wird eine transparente Deckschicht, d.h. in der Regel ein Klarlack, der keine oder nur transparente Pigmente enthält, aufgebracht.

In der Basisschicht werden häufig metallische Pigmente verwendet, die zu den sogenannten Metallic-Lackierungen führen. In der industriellen Praxis werden bisher bei der Automobillackierung konventionelle Überzugsmittel verwendet, die einen hohen Gehalt an organischen Lösungsmitteln enthalten. Aus wirtschaftlichen Gründen und zur Verringerung der Umweltbelastung ist man bemüht, organische Lösungsmittel in Überzugsmassen so weit wie möglich zu vermeiden.

Es sind daher Überzugsmittel bekannt geworden, die als Lösungs- oder Dispergiermittel überwiegend Wasser enthalten und in denen organische Lösungsmittel nur noch in geringen Mengen enthalten sind. So wird in der DE-A 29 26 584 eine wäßrige Bindemittelmischung zur Herstellung von Basis-Metallic-Lacken beschrieben, die als Bindemittel ein wasserlösliches Kondensationsprodukt aus einem Polyester, einem Trimellithsäure enthaltenden Polycarbonsäuregemisch, einem epoxidierten Öl und basischen Verbindungen enthält.

Die in der DE-A-29 26 584 offenbarten Überzugsmittel enthalten einen hohen Anteil an organischen Lösemitteln.

In der DE-B-25 57 434 wird ein wäßriges Überzugsmittel zur Herstellung der Basisschicht eines Mehrschichtüberzuges offenbart. Dieses Überzugsmittel enthält als Bindemittel eine Mischung aus einem Emulsionspolymer und einem Lösungspolymer auf Polyacrylatharzbasis.

In der DE-A-26 45 779 werden vor allem zur Lederbeschichtung geeignete wäßrige Polyurethandispersionen beschrieben, die aus Dihydroxylverbindungen, einer Kombination von aromatischen und (cyclo)aliphatischen Diisocyanaten, wasserlöslichen Salzen von aliphatischen (Di-)Aminocarbon- oder -sulfonsäuren und salzgruppenfreien Verbindungen mit mindestens zwei gegenüber Isocyanatgruppen reaktionsfähigen Wasserstoffatomen als Kettenverlängerungsmittel hergestellt werden. Der DE-A-26 45 779 sind keinerlei Hinweise zur Lösung der der vorliegenden Erfindung zugrundeliegenden technischen Aufgabe zu entnehmen. Außerdem unterscheiden sich die in der DE-A-26 45 779 offenbarten Polyurethane in ihrem Aufbau wesentlich von den in der vorliegenden Erfindung verwendeten Polyurethanen.

Der Gegenstand der Erfindung betrifft ein Verfahren der eingangs genannten Art, bei dem das Überzugsmittel für die Basisschicht als Bindemittel eine an sich bekannte, wäßrige Polyurethandispersion enthält, die hergestellt worden ist durch Umsetzung
- (A): eines linearen Polyether- und/oder Polyesterdiols mit endständigen Hydroxylgruppen und einem Molekulargewicht von 400 bis 3000 mit
- (B): einem Diisocyanat und
- (C): einer Verbindung, die zwei gegenüber Isocyanatgruppen reaktive Gruppen und mindestens eine zur Anionenbildung befähigte Gruppe aufweist, wobei die zur Anionenbildung befähigte Gruppe vor der Umsetzung mit einem tertiären Amin neutralisiert worden ist
zu einem Zwischenprodukt mit endständigen Isocyanatgruppen, Überführung des aus (A), (B) und (C) erhaltenen Zwischenprodukts in eine überwiegend wäßrige Phase und
- (D): Umsetzung der noch erhaltenen Isocyanatgruppen mit einem Di- und/oder Polyamin mit primären und/oder sekundären Aminogruppen.

Die in dem erfindungsgemäßen Verfahren eingesetzten, an sich bekannten, wäßrigen Polyurethandispersionen werden in der US-A-4,147,679, in dem Artikel "Neuere wäßrige PUR-Systeme" (veröffentlicht in der Zeitschrift "Die Angewandte Makromolekulare Chemie 98 (1981) 133-165 (Nr. 1568)) und in der DE-A-27 44 544 und DE-B-24 46 440 beschrieben.

Das erfindungsgemäße Verfahren ergibt insbesondere bei Verwendung von metallischen Pigmenten Überzüge mit einem besonders guten Metallic-Effekt, da es zu einer sehr günstigen Anordnung und Fixierung der metallischen Pigmente im Lackfilm führt. Aber auch bei Verwendung konventioneller, nicht metallischer Pigmente ergeben sich Überzüge mit ausgezeichneter dekorativer Wirkung. Ein besonderer Vorteil der erfindungsgemäß eingesetzten überzugsmittel liegt darin, daß sie beim Aufbringen einer weiteren überzugsschicht auf den vorgetrockneten aber noch nicht eingebrannten Film nur ein sehr geringes bzw. teilweise gar kein Anlösen zeigen.

Als Komponente (A) geeignete Polyetherdiole entsprechen der allgemeinen Formel: 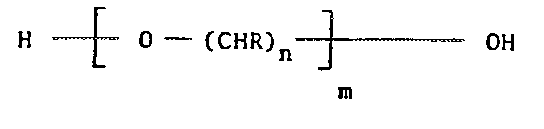 in der R = Wasserstoff oder ein niedriger Alkylrest, gegebenenfalls mit verschiedenen Substituenten, ist, n = 2 bis 6 und m = 10 bis 50 oder noch höher ist. Beispiele sind Poly(oxytetramethylen)glykole, Poly(oxyethylen)glykole und Poly(oxypropylen)glykole.

Die bevorzugten Polyalkylenetherpolyole sind Poly(oxypropylen)glykole mit einem Molekulargewicht im Bereich von 400 bis 3 000.

Polyesterdiole können ebenfalls als polymere Diolkomponente (Komponente A) bei der Erfindung verwendet werden. Man kann die Polyesterdiole durch Veresterung von organischen Dicarbonsäuren oder ihren Anhydriden mit organischen Diolen herstellen. Die Dicarbonsäuren und die Diole können aliphatische oder aromatische Dicarbonsäuren und Diole sein.

Die zur Herstellung der Polyester verwendeten Diole schließen Alkylenglykole wie Ethylenglykol, Butylenglykol, Neopentylglykol und andere Glykole wie Dimethylolcyclohexan ein.

Die Säurekomponente des Polyesters besteht in erster Linie aus niedermolekularen Dicarbonsäure oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure, Glutarsäure, Hexachlorheptandicarbonsäure und Tetrachlorphthalsäure. Anstelle dieser Säuren können auch ihre Anhydride, soweit diese existieren, verwendet werden.

Ferner lassen sich bei der Erfindung auch Polyesterdiole, die sich von Lactonen ableiten, als Komponente A benutzen. Diese Produkte arhält man beispielsweise durch die Umsetzung eines ε-Caprolactons mit einem Diol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 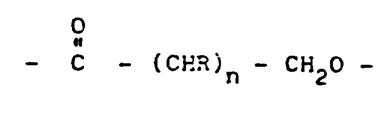 entsprechen, in der n bevorzugt 4 bis 6 ist und der Substituent Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden: 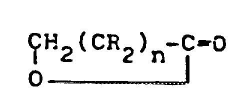 in der n und R die bereits angegebene Bedeutung haben.

Die für die Herstellung der Polyesterdiole bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Diolen schließen ein Ethylenglykol, 1,3-Propandiol, 1,4-Butandiol, Dimethylolcyclohexan.

Als Komponente (B) können für die Herstellung der Polyurethandispersion beliebige organische Diisocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat, 2.3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl5-isocyanato-1,3,3-trimethylcyclohexan, Bis-(4-isocyanatocyclohexyl)methan, Bis-(4-isocyanatophenyl)-methan, 4,4'-Diisocyanatodiphenylether und 2,3-Bis-(8-isocyanatooctyl)-4-octyl-5-hexylcyclohexen.

Die Umsetzung der Komponente (A) mit dem Diisocyanat wird so durchgeführt, daß das entstehende erste Zwischenprodukt endständige Isocyanatgruppen aufweist. d.h. das Diisocyanat wird im Überschuß eingesetzt.

Als Komponente (C) werden Verbindungen verwendet, die 2 mit Isocyanatgruppen reagierende Gruppen und mindestens eine zur Anionenbildung befähigte Gruppe enthalten. Geeignete mit Isocyanatgruppen reagierende Gruppen sind insbesondere Hydroxylgruppen und primäre und sekundäre Aminogruppen. Als zur Anionenbildung befähigte Gruppen kommen Carboxyl- und Sulfonsäuregruppen in Betracht. Diese Gruppen werden vor der Umsetzung mit einem tertiären Amin neutralisiert, um eine Reaktion mit den Isocyanatgruppen zu vermeiden. Die Umsetzung wird so durchgeführt, daß ein zweites Zwischenprodukt mit endständigen Isocyanatgruppen entsteht. Die Molmengen der Reaktionspartner werden also so gewählt, daß das erste Zwischenprodukt im Überschuß vorliegt.

Als Verbindung, die mindestens 2 Isocyanatgruppen reagierende Gruppen und mindestens 1 zur Anionenbildung befähigte Gruppe enthält, sind beispielsweise Dihydroxypropionsäure, Dimethylolpropionsäure, Dihydroxybernsteinsäure oder Dihydroxybenzoesäure geeignet. Geeignet sind auch die durch Oxydation von Monosacchariden zugänglichen Polyhydroxysäuren, z.B. Glukonsäure, Zuckersäure, Schleimsäure, Glukuronsäure und dergleichen.

Aminogruppenhaltige Verbindungen sind beispielsweise α,δ-Diaminovaleriansäure, 3,4-Diaminobenzoesäure, 2,4-Diamino-toluol-sulfonsäure-(5), 4,4'-Diamino-di-phenylethersulfonsäure und dergleichen.

Das aus (A), (B) und (C) erhaltene Zwischenprodukt weist anionische Gruppen auf, die mit einem tertiären Amin neutralisiert werden. Geeignete tertiäre Amine sind beispielsweise Trimethylamin, Triethylamin, Dimethylanilin, Diethylanilin, Triphenylamin und dergleichen. Das Produkt wird in eine wäβrige Phase überführt und ergibt eine feinteilige Polyurethandispersion.

Nach Überführung des zweiten Zwischenprodukts in die wäβrige Phase werden die noch vorhandenen Isocyanatgruppen mit einem primären oder sekundären Diamin (Komponente D) als Kettenverlängerungsmittel zu N-Alkylharnstoffgruppen umgesetzt. Hierfür geeignete Diamine sind beispielsweise Ethylendiamin. Diaminopropan, Hexamethylendiamin, Hydrazin, Aminoethylethanolamin und dergleichen. Die Umsetzung mit dem Diamin führt zu einer weiteren Verknüpfung und Erhöhung des Molekulargewichts.

Vorteilhaft kann ein Teil der Komponente (C) durch eine Verbindung (E) ersetzt werden, die zwei gegenüber Isocyanatgruppen reaktive Gruppen aufweist, jedoch frei von zur Anionenbildung befähigten Gruppen ist. Hierdurch kann der Anteil an ionischen Gruppen in dem Polyurethanharz auf ein gewünschtes Maß eingestellt werden. Die Komponente (D) wird vorzugsweise in einer solchen Menge eingesetzt, daß das Polyurethanharz eine Säurezahl von 5 bis 70, besonders bevorzugt von 12 bis 30, hat. Als Komponente (E) sind beispielsweise niedermolekulare Diole oder Diamine mit primären oder sekundären Aminogruppen geeignet.

Die erfindungsgemäß eingesetzten Überzugsmittel weisen gegenüber anderen wäßrigen Dispersionen eine verbesserte Pigmentierbarkeit auf. Insbesondere bei Verwendung von metallischen Pigmenten ergeben sie einen guten Effekt. Diese Vorteile werden durch die oben beschriebene Polyurethandispersion bewirkt, die also ein wesentlicher Bestandteil der Überzugsmittel ist. Wenn nun auch die vorteilhaften Eigenschaften bei Verwendung der Polyurethandispersion als alleinigem Bindemittel erreicht werden, so ist es doch in vielen Fällen wünschenswert, die Überzugsmittel durch Mitverwendung anderer Bindemittel oder Härtungskomponenten zu modifizieren oder im Hinblick auf bestimmte Eigenschaft gezielt zu verbessern.

Vorteilhaft enthalten die Überzugsmittel als zusätzliche Bindemittelkomponente ein wasserverdünnbares Melaminharz in einem Anteil von 1 bis 80 Gew.-% , bevorzugt 20 bis 60 Gew.-%, bezogen auf den Festkörpergehalt der Polyurethandispersion.

Wasserlösliche Melaminharze sind an sich bekannt und werden in größerem Umfang eingesetzt. Es handelt sich hierbei um veretherte Melamin-Formaldehyd-Kondensationsprodukte. Ihre Wasserlöslichkeit hängt abgesehen vom Kondensationsgrad, der möglichst niedrig sein soll, von der Veretherungskomponente ab, wobei nur die niedrigsten Glieder der Alkanol- bzw. Ethylenglykolmonoetherreihe wasserlösliche Kondensate ergeben. Die größte Bedeutung haben die Hexamethoxymethylmelaminharze. Bei Verwendung von Lösungsvermittlern können auch butanolveretherte Melaminharze in wäßriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppe nach Neutralisation wasserlöslich und können als Vernetzerkomponente in den Überzugsmitteln eingesetzt werden.

Anstelle der beschriebenen Melaminharze können auch andere wasserlösliche oder wasserdispergierbare Aminoharze wie z.B. Benzoguanaminharze eingesetzt werden.

Für den Fall, daß das erfindungsgemäß eingesetzte Überzugsmittel ein Melaminharz enthält, kann es vorteilhaft zusätzlich als weitere Bindemittelkomponente ein wasserverdünnbares Polyesterharz und/oder ein wasserverdünnbares Polyacrylatharz enthalten, wobei das Gewichtsverhältnis Melaminharz : Polyester/Polyacrylatharz 2 : 1 bis 1 : 4 beträgt und der Gesamtanteil an Melaminharz, Polyester-/Polyacrylatharz, bezogen auf den Festkörpergehalt der Polyurethandispersion 1 bis 80 Gew.-%, bevorzugt 24 bis 60 Gew.-% beträgt.

Wasserverdünnbare Polyester sind solche mit freien Carboxylgruppen, d.h. Polyester mit hoher Säurezahl. Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen. Nach Neutralisation mit Basen sind die so erhaltenen Polyester in Wasser löslich und verfilmen beim Einbrennen. Die zweite Möglichkeit besteht in der Bildung partieller Ester von Di- oder Polycarbonsäuren mit hydroxylreichen Polyestern mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

Die wasserverdünnbaren Polyacrylatharze enthalten ebenso wie die oben beschriebenen Polyesterharze freie Carboxylgruppen. Es handelt sich in der Regel um Acryl- bzw. Methacrylcopolymerisate, und die Carboxylgruppen stammen aus den Anteilen an Acryl- oder Methacrylsäure.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperaturen beständig ist, bei erhöhten Temperaturen, in der Regel im Bereich von etwa 90 bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis 15 Kohlenstoffatome enthalten. Beispiele von geeigneten Diisocyanaten sind die oben genannten Diisocyanate (Komponente B).

Es können auch Polyisocyanate von höherer Isocyanatfunktionalität verwendet werden. Beispiele dafür sind Tris-(4-isocyanatophenyl)-methan, 1,3,5-Triisocyanatobenzol, 2,4,6-Triisocyanatotoluol, 1,3,5-Tris-(6-iso-cyanatohexyl)-biuret. Bis-(2,5-diisocyanato-4-methyl-phenyl)-methan und polymere Polyisocyanate, wie Dimere und Trimere von Diisocyanatotoluol. Ferner kann man auch Mischungen von Polyisocyanaten benutzen.

Die als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten. Dazu werden bekanntlich Polyole mit einem Überschuß von Polyisocyanaten umgesetzt, wodurch Präpolymere mit endständigen Isocyanatgruppen entstehen. Beispiele von Polyolen, die hierfür verwendet werden können, sind einfache Polyole, wie Glykole, z.B. Ethylenglykol und Propylenglykol, und andere Polyole, wie Glycerin, Trimethylolpropan, Hexantriol und Pentaerythrit; ferner Monoether, wie Diethylenglykol und Tripropylenglykol sowie Polyether, die Kondensate solcher Polyole mit Alkylenoxiden sind. Beispiele von Alkylenoxiden, die sich für die Kondensation mit diesen Polyolen unter Bildung von Polyethern eignen, sind Ehtylenoxid, Propylenoxid, Butylenoxid und Styroloxid. Man bezeichnet diese Kondensate im allgemeinen als Polyether mit endständigen Hydroxylgruppen. Sie können linear oder verzweigt sein. Beispiele von solchen Polyethern sind Polyoxyethylenglykol von einem Molekulargewicht von 1 540, Polyoxypropylenglykol mit einem Molekulargewicht von 1 025, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Dipentaerythrit, Tripentaerythrit, Polypentaerythrit, Methylglukosiden und Saccharose mit Alkylenen, wie Ethylenoxid, Propylen- oxid oder Mischungen davon.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ehtly-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.

Andere geeignete Blockierungsmittel sind Oxime, wie Methylethylketonoxim, Acetonoxim und Cyclohexanonoxim, sowie auch Caprolactame, Phenole und Hydroxamsäureester. Bevorzugte Blockierungsmittel sind Malonester, Acetessigester und β-Diketone.

Die blockierten Polyisocyanate wprden hergestellt, indem man eine ausreichende Menge eines Alkohols mit dem organischen Polyiscocyanat umsetzt, so daß keine freien isocyanatgruppen mehr vorhanden sind.

Die Überzugsmittel können alle bekannten und in der Lackindustrie üblichen Pigmente oder Farbstoffe enthalten.

Als Farbstoffe bzw. Pigmente. die anorganischer oder organischer Natur sein können, werden beispielsweise genannt Titandioxid, Graphit, Ruß, Zinkchromat, Strontiumchromat, Bariumchromat, Bleichromat, Bleicyanamid, Bleisilicochromat, Zinkoxid, Cadmiumsulfid, Chromoxid, Zinksulfid, Nickeltitangelb, Chromtitangelb, Eisenoxidrot, Eisenoxidschwarz, Ultramarinblau, Phthalocyaninkomplexe, Naphtholrot, Chinacridone, halogenierte Thioindigo-Pigmente oder dergleichen.

Als besonders bevorzugte Pigmente werden Metallpulver einzeln oder im Gemisch wie Kupfer, Kupferlegierungen, Aluminium und Stahl, vorzugsweise Aluminiumpulver, in wenigstens überwiegendem Anteil eingesetzt, und zwar in einer Menge von 4,5 bis 25 Gew.-% bezogen auf den gesamten Festkörpergehalt der Überzugsmittel an Bindemitteln. Wenn die Polyurethandispersion alleiniges Bindemittel ist, werden als metallische Pigmente solche handelsübliche Metallpulver bevorzugt, die für wäßrige Systeme speziell vorbehandelt sind.

Die Metallpulver können auch zusammen mit einem oder mehreren der obengenannten nichtmetallischen Pigmente bzw. Farbstoffe eingesetzt werden. In diesem Fall wird deren Anteil so gewählt, daß der erwünschte Metallic-Effekt nicht unterdrückt wird.

Die erfindungsgemäßen Überzugsmittel können auch weitere übliche Zusätze wie Lösungsmittel, Füllstoffe, Weichmacher, Stabilisatoren, Netzmittel, Dispergierhilfsmittel, Verlaufsmittel, Entschäumer und Katalysatoren einzeln oder im Gemisch in den üblichen Mengen enthalten. Diese Substanzen können den Einzelkomponenten und/oder der Gesamtmischung zugesetzt werden.

Geeignete Füllstoffe sind z.B. Talkum, Glimmer, Kaolin, Kreide, Quarzmehl, Asbestmehl, Schiefermehl, Bariumsulfat, verschieden Kieselsäuren, Silikate, Glasfasern, organische Fasern oder dergleichen.

Die erfindungsgemäß eigesetzten Überzugsmittel können neben Wasser die üblichen Lösungsmittel, beispielsweise aliphatische oder aromatische Kohlenwasserstoffe, ein- oder mehrwertige Alkohole, Ether, Ester, Glykolether sowie deren Ester, Ketone wie z.B. Toluol, Xylol, Butanol, Ethyl- oder Butylglykol (= Ethylenglykolmonoethyl-oder -Butylether) sowie deren Acetate, Butyldiglykol (Ethylenglykoldibutylether), Ethylenglykoldimethylether, Diethylenglykoldimethylether, Cyclohexanon, Methylethylketon, Aceton, Isophoron oder Mischungen davon enthalten.

Die Herstellung der erfindungsgemäß eingesetzten Überzugsmittel wird folgendermaßen durchgeführt:

Zunächst wird aus den obengenannten Komponenten (A), (B), (C), (D) und gegebenenfalls (E) eine feinteilige wäßrige Polyurethandispersion hergestellt. Die Umsetzung der Komponenten miteinander erfolgt nach den gut bekannten Verfahren der organischen Chemie. Hierbei werden zunächst das Polyether- oder Polyesterdiol, das Diisocyanat und die gegenüber Isocyanatgruppen bifunktionellen Komponenten (C) und gegebenenfalls (E) in organischen Lösungsmitteln miteinander umgesetzt, nachdem zuvor die zur Anionenbildung befähigten Gruppen der Komponente (C) mit einem tertiären Amin neutralisiert worden sind. Bei der Umsetzung können zunächst die Komponenten (A) und (B) miteinander zur Reaktion gebracht und danach die weitere Umsetzung mit (C) und (E) durchgeführt werden, oder es können die genannten Komponenten gleichzeitig eingesetzt werden. Hierauf wird das erhaltene Produkt in eine zumindest überwiegend wäßrige Phase überführt und die Reaktion der noch vorhandenen Isocyanatgruppen mit einem Di- und/oder Polyamin mit primären und/oder sekundären Aminogruppen durchgeführt. Nachdem der pH-Wert der resultierenden Polyurethandispersion kontrolliert und gegebenenfalls auf einen Wert zwischen 6 und 9 eingestellt worden ist, bildet die Dispersion die Grundlage der erfindungsgemäßen Uberzugsmittel, in die die übrigen Bestandteile wie z.B. zusätzliche Bindemittel, Pigmente, organische Lösungsmittel und Hilfsstoffe durch Dispergieren beispielsweise mittels eines Rührers oder Dissolvers homogen eingearbeitet werden. Abschließend wird erneut der pH-Wert kontrolliert und gegebenenfalls auf einen Wert von 6 bis 9, vorzugsweise 7,0 bis 8,5 eingestellt. Weiterhin werden der Festkörpergehalt und die Viskosität auf den jeweiligen Applikationsbedingungen angepaßte Werte eingestellt.

Die gebrauchsfertigen Überzugsmittel weisen in der Regel einen Festkörpergehalt von 10 bis 30 Gew.-% auf, und ihre Auslaufzeit im ISO-Becher 4 beträgt 15 bis 30 Sekunden, vorzugsweise 18 bis 25 Sekunden. Ihr Anteil an Wasser beträgt 60 bis 90 Gew.-%, der an organischen Lösungsmitteln 0 bis 20 Gew.-%, jeweils bezogen auf das gesamte Überzugsmittel.

Die erfindungsgemäß eingesetzten Überzugsmittel dienen also zur Herstellung der Basisschicht eines Mehrschichtüberzuges. Als Decklack sind grundsätzlich alle bekannten nicht oder nur transparent pigmentierten Überzugsmittel geeignet. Hierbei kann es sich um konventionelle lösungsmittelhaltige Klarlacke, wasserverdünnbare Klarlacke oder Pulverklarlacke handeln.

Die Erfindung betrifft weiterhin ein Substrat, beschichtet mit einem Mehrschichtüberzug, der erhalten worden ist durch Aufbringung eines wasserverdünnbaren Überzugsmittels als Basisschicht, das Pigmente, mindestens ein filmbildendes Bindemittel und gegebenenfalls Verlaufsmittel, Thixotropierungsmittel, Füllstoffe, organische Lösungsmittel und andere Hilfsstoffe enthalten hat, Aufbringung eines transparenten Überzugsmittels als Deckschicht und anschließende Erhitzung des beschichteten Substrats, dadurch gekennzeichnet, daß das Überzugsmittel für die Basisschicht als Bindemittel eine an sich bekannte, wäßrige Polyurethandispersion mit einer Säurezahl des Polyurethanharzes von 5 bis 70 enthalten hat, die hergestellt worden ist durch Umsetzung
- (A): eines linearen Polyether- und/oder Polyesterdiols mit endständigen Hydroxylgruppen und einem Molekulargewicht von 400 bis 3000 mit
- (B): einem Diisocyanat und
- (C): einer Verbindung, die zwei gegenüber Isocyanatgruppen reaktive Gruppen und mindestens eine zur Anionenbildung befähigte Gruppe aufweist, wobei die zur Anionenbildung befähigte Gruppe vor der Umsetzung mit einem tertiären Amin neutralisiert worden ist
zu einem Zwischenprodukt mit endständigen Isocyanatgruppen, Überführung des aus (A), (B) und (C) erhaltenen Zwischenprodukts in eine überwiegend wäßrige Phase und
- (D): Umsetzung der Isocyanatgruppen mit einem Diund/oder Polyamin mit primären und/oder sekundären Aminogruppen.

Geeignete Substrate sind Gegenstände aus Metall, Holz, Kunststoff u.a. Materialien.

Im folgenden wird die Erfindung anhand von Ausführungsbeispielen näher erläutert, wobei zunächst die Herstellung der Polyurethandispersionen beschrieben wird.

### Polyurethan-Dispersion 1

830 g eines Polyesters aus Neopentylglykol, Hexandiol-1,6 und Adipinsäure mit einer Hydroxylzahl von 135 und einer Säurezahl unter 3 werden bei 100°C 1 Stunde im Vakuum entwässert. Bei 80° C werden 524 g 4,4-Dicyclohexylmethandiisocyanat zugegeben und bei 90° C gerührt, bis der Gehalt an freien Isocyanatgruppen 6,18 Gew.-%, bezogen auf die Gesamteinwaage, beträgt. Nach Abkuhlung auf 60°C wird eine Lösung von 67 g Dimethylolpropionsäure und 50 g Triethylamin in 400 g N-Methylpyrrolidon zugegeben und 1 Stunde bei 90°C gerührt.

Die erhaltene Masse wird unter intensivem Rühren in 2400 g kaltes deionisiertes Wasser gegeben. Man erhält eine feinteilige Dispersion. Zu dieser Dispersion werden unter intensivem Rühren innerhalb von 20 Minuten 80 g einer 30 %igen wäßrigen Lösung von Ethylendiamin zugegeben. Die resultierende, sehr feinteilige Dispersion hat einen Festkörpergehalt von 35 % und eine Auslaufzeit von 23 Sekunden im DIN-Becher 4.

### Polyurethan-Dispersion 2

570 g eines handelsüblichen aus Caprolacton und einem Glykol hergestellten Polyesters mit einer Hydroxylzahl von 196 werden bei 100°C 1 Stunde im Vakuum entwässert. Bei 80°C werden 524 g 4.4'-Dicyclohexylmethandiisocyanat zugegeben und bei 90°C so lange gerührt, bis der Isocyanatgehalt 7,52 Gew.-%, bezogen auf die Gesamteinwaage, beträgt. Nach Abkühlen auf 60°C wird eine Lösung von 67 g Dimethylolpropionsäure und 50 g Triethylamin in 400 g N-Methylpyrrolidon zugegeben und 1 Stunde bei 90° C gerührt. Die erhaltene Masse wird unter intensivem Rühren in 1840 g kaltes deionisiertes Wasser gegeben. Zu der erhaltenen Dispersion werden unter intensivem Rühren innerhalb von 20 Minuten 86 g einer 15 %igen Hydrazinlösung zugegeben. Die resultierende, sehr feinteilige Dispersion hat einen Festkörpergehalt von 35 % und eine Auslaufzeit von 27 Sekunden im DlN-Becher 4.

### Polyurethan-Dispersion 3

500 g eines Polypropylenglykols mit einer Hydroxylzahl von 112 werden bei 100°C 1 Stunde im Vakuum entwässert. Bei 80°C werden 262 g 4,4'-Dicyclohexylmethandiisocyanat zugegeben und bei 90°C gerührt, bis der Isocyanatgehalt 5,47 Gew.-%, bezogen auf die Gesamteinwaage, beträgt.

Nach Abkühlen auf 60°C wird eine Lösung von 33,5 g Dimethylolpropionsäure und 25 g Triethylamin in 200 g N-Methylpyrrolidon zugegeben und 1 Stunde bei 90°C gerührt. Die so erhaltene Masse wird unter intensivem Rühren in 1650 g deionisiertes Wasser gegeben. Zu der entstandenen Dispersion werden nun unter Rühren innerhalb von 20 Minuten 40 g einer 15 %igen Hydrazinlösung gegeben. Die resultierende Dispersion hat einen Festkörpergehalt von 32 % und eine Auslaufzeit von 23 Sekunden im DIN-Becher 4.

### Polyurethan-Dispersion 4

1000 g eines Polyesters aus Neopentylglykol und Adipinsäure mit einer Hydroxylzahl von 56 werden bei 100°C 1 Stunde im Vakuum entwässert. Bei 80°C werden 202 g Hexamethylendiisocyanat zugegeben und bei 90°C gerührt, bis der Isocyanatgehalt 4,77 Gew.-% , bezogen auf die Gesamteinwaage, beträgt. Nach Abkühlen auf 60°C wird eine Lösung von 47 g Dimethylolpropionsäure und 35 g Triethylamin in 300 g N-Methylpyrrolidon zugegeben und 1 Stunde bei 90° C gerührt. Die so erhaltene Polyurethanmasse wird nun unter intensivem Rühren in 4650 g kaltes deionisiertes Wasser eingerührt. Zu der entstandenen Dispersion werden unter Rühren innerhalb von 20 Minuten 60 g einer 15 %igen Hydrazinlösung zugegeben. Die resultierende Dispersion hat einen Festkörpergehalt von 20% und eine Auslaufzeit von 82 Sekunden im DIN-Becher 4.

### Polyurethan-Dispersion 5

650 g eines handelsüblichen Polyethers aus Tetrahydrofuran mit einer Hydroxylzahl von 173 werden bei 100°C 1 Stunde im Vakuum entwässert. Bei 80° C werden 533 g Isophorondiisocyanat zugegeben und bei 90°C gerührt, bis der Isocyanatgehalt 9,88 Gew.-%, bezogen auf die Gesamteinwaage, beträgt. Nach Abkühlen auf 60°C wird eine Lösung von 93 g Dimethylolpropionsäure und 70 g Triethylamin in 400 g N-Methylpyrrolidon zugegeben und 1 Stunde bei 90°C gerührt. Die so erhaltene Polyurethanmasse wird unter intensivem Rühren in 4700 g kaltes deionisiertes Wasser eingerührt. Zu der entstandenen Dispersion werden nun 120 g einer 15 %igen Hydrazinlösung innerhalb von 20 Minuten zugegeben. Die resultierende Dispersion hat einen Festkörpergehalt von 19 % und eine Auslaufzeit von 27 Sekunden im DIN-Becher 4.

### Polyurethandispersion 6

Es wird wie im Beispiel 2 verfahren, jedoch werden anstelle der 400 g N-Methylpyrrolidon 800 ml Aceton verwendet. Die so erhaltene Dispersion wird durch Vakuumdestillation vom Aceton befreit, und man erhält eine rein wäßrige Polyurethan-Dispersion mit einem Festkörpergehalt von 39 % und einer Auslaufzeit von 63 Sekunden im DIN-Becher 4.

### Polyurethan-Dispersion 7

Es wird zunächst wie im Beispiel 2 verfahren, jedoch werden anstelle der Hydrazinlösung 200 g einer 40 %igen wäßrigen Lösung von Diethanolamin verwendet.

### Polyurethan-Dispersion 8

Es wird zunächst wie im Beispiel 2 verfahren, jedoch werden anstelle der Hydrazinlösung 100 g einer 40 %igen wäßrigen Lösung von N-2-Hydroxyethyldiaminoethan verwendet.

### Herstellung der Überzugsmittel

Die Zusammensetzung der Überzugsmittel ist in der Tabelle 1 angegeben, in der die Zahlenangaben Gewichtsteile bedeuten. Zu den dort aufgeführten Bestandteilen wird folgendes ausgeführt:

### Verdickungsmittel 1:

Paste eines Natrium-Magnesium-Silikats mit Schichtstruktur, 3 %ig in Wasser

### Verdickungsmittel 2:

Paste eines Natrium-Magnesium-Fluor-Lithium-Silikats, 3 % in Wasser; zur Herstellung der Paste wird das Silikat mittels eines Dissolvers 30-60 Minuten in Wasser eingerührt und über Nacht stehengelassen. Am nächsten Tag wird noch einmal 10 bis 15 Minuten gerührt.

### Verdickungsmittel 3:

3 %ige wäßrige Paste eines gereinigten Bentonits.

### Polyesterharz:

Der verwendete wasserlösliche Polyester wird folgendermaßen hergestellt:

In einem Reaktor, der mit einem Rührer, einem Thermometer und einer Füllkörperkotonne ausgestattet ist, werden 832 Gew.-Teile Neopentylglykol eingewogen und zum Schmelzen gebracht. Es werden 664 Gew.-Teile Isophthalsäure zugegeben. Unter Rühren wird so aufgeheizt, daß die Kolonnenkopftemperatur 100°C nicht übersteigt. Es wird bei maximal 220°C so lange verestert, bis eine Säurezahl von 8,5 erreicht ist. Nach Abkühlen auf 180°C werden 384 Gew.-Teile Trimellithsäureanhydrid zugegeben und weiter verestert, bis eine bis eine Säurezahl von 39 erreicht ist. Es wird mit 425 Gew.-Teilen Butanol verdünnt.

### Acrylatharz:

Das Acrylatharz wird folgendermaßen hergestellt:

In einen Reaktionskessel mit Rührer, Thermometer und Rückflußkühler werden 400 Gew.-Teile n-Butanol eingewogen und auf 110°C erhitzt. Dann werden aus einem Zulaufgefäß ein Gemisch von 1000 Gew.-Teilen n-Butylmethacrylat, 580 Gew.-Teilen Methylmethacrylat, 175 Gew.-Teilen 2-Hydroxyethylacrylat und 175 Gew.- Teilen Acrylsäure und aus einem zweiten Zulaufgefäß eine Mischung aus 80 Gew.-Teilen t-Butylperbenzoat und 80 Gew.-Teilen n-Butanol innerhalb von 4 Stunden gleichmäßig und gleichzeitig in den Reaktionskessel dosiert. Dabei wird die Temperatur bei 110° gehalten. Nach dem Zulauf wird bei 110°C weiter polymerisiert und nach 1 Stunde wird eine Mischung von 10 Gew.-Teilen t-Butylperbenzoat und 10 Gew.-Teilen n-Butanol zugegeben. Nach weiteren 1,5 stunden wird eine Polymerisatlösung erhalten, die einen Festkörper von 79,7 Gew.-%, eine Säurezahl von 64,0, bezogen auf den Festkörpergehalt, und eine Viskosität von 850 mPa.s gemessen im Platte-Kegel-Viskosimeter bei einem Festkörpergehalt von 60 Gew.-% in n-Butanol hat.

### Melaminharz:

Handelsübliches methanolverethertes Melamin-Formaldehyd-Harz, Festkörpergehalt 70 Gew.-% in Wasser.

### Aluminiumpigment I:

Handelsübliche Aluminium-Pigmentpaste, 65 %ig in Wasser, durchschnittlicher Teilchendurchmesser 10 µm.

### Aluminiumpigment II:

Handelsübliche Aluminium-Pigmentpaste, 65 %ig in Testbenzin/Lösungsbenzol, durchschnittlicher Teilchendurchmesser 10 µm.

### Blaupigment:

Indanthronpigment, Colour Index: Pigment Blue 60/69800.

**Tabelle 1**

| **Beispiel** | | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Verdickungsmittel 1 | - | - | - | 25 | 25 | - | - | - | - | - | - | - | - |
| Verdickungsmittel 2 | 25 | 25 | 25 | - | - | - | - | 25 | - | - | - | - | 15 |
| Verdickungsmittel 3 | - | - | - | - | - | 25 | 25 | - | 25 | 25 | 25 | - | |
| Polyurethandispersion 1 35 % Festkörper | 25 | - | - | - | - | - | - | - | - | - | - | - | - |
| Polyurethandispersion 2 35 % Festkörper | - | 25 | - | - | - | - | - | - | - | - | 25 | - | |
| Polyurethandispersion 3 32 % Festkörper | - | - | 25 | - | - | - | - | - | - | 25 | - | - | - |
| Polyurethandispersion 4 20 % Festkörper | - | - | - | 30 | - | - | - | - | - | - | - | - | 20 |
| Polyurethandispersion 5 19 % Festkörper | - | - | - | - | 30 | - | - | - | - | - | - | 40 | - |
| Polyurethandispersion 6 39 % Festkörper | - | - | - | - | - | 25 | - | - | - | - | - | - | - |
| Polyurethandispersion 7 35 % Festkörper | - | - | - | - | - | - | 25 | 30 | - | - | - | - | - |
| Polyurethandispersion 8 35 % Festkörper | - | - | - | - | - | - | - | - | 25 | - | - | - | - |
| Polyesterharz 80 % Festkörper | 5 | 5 | 5 | 5 | - | - | 5 | - | - | 5 | 5 | - | 8 |
| Acrylatharz 80 % Festkörper | - | - | - | - | 6 | 6 | - | - | 5 | - | - | - | |
| Dimethylethanolamin 10 %ig in Wasser | 0,5 | 0,5 | 0,5 | 0,5 | 0,5 | 0,5 | 0,5 | 0,5 | 0,5 | 0,5 | 0,5 | - | 0,6 |
| Melaminharz | 2 | 2 | 2 | 2 | 2 | 2 | 2 | 5 | 2 | 2 | 2 | - | 3 |
| Aluminiumpigment I | 5 | 5 | 5 | 5 | 5 | 5 | 5 | 5 | 5 | - | 3 | 5 | |
| Blaupigment | - | - | - | - | - | - | - | - | - | - | 2 | - | 4 |
| Aluminiumpigment II | - | - | - | - | - | - | - | - | - | 5 | - | - | |
| Titandioxid, Rutiltyp | | | | | | | | | | | | | 1 |
| Butylglykol | 5 | 5 | 5 | 5 | 5 | - | 5 | 5 | 5 | 5 | 5 | 8 | 5 |
| Wasser | 32,5 | 32,5 | 32,5 | 27,5 | 26,5 | 31,5 | 32,5 | 29,5 | 32,5 | 32,5 | 32,5 | 47 | 43,4 |

Die Überzugsmittel werden im einzelnen wie folgt hergestellt:

### Beispiel 1 bis 9

Das verwendete Verdickungsmittel wird unter Rühren mit der Polyurethandispersion versetzt. Unter weiterem Rühren werden die übrigen Bestandteile zugegeben. Nachdem 30 Minuten gerührt worden ist, wird mit Wasser eine Auslaufzeit von 14 bis 15 Sekunden im DIN-Becher 4 eingestellt.

### Beispiel 10

5 Teile Aluminiumpigment II werden mit 5 Teilen Butylglykol und 5 Teilen Polyesterharz 15 Minuten gerührt. Unter weiterem Rühren werden die Bentonitpaste, die Polyurethandispersion, die Dimethylethanolaminlösung, das Melaminharz und das Wasser zugegeben. Nach 30 Minuten Rühren wird mit Wasser auf einer Auslaufzeit von 14 bis 15 sekunden im DIN-Becher 4 eingestellt.

### Beispiel 11 und 13

Das Blaupigment und das Titandioxid werden mit dem Polyester und dem Butylglykol unter Rühren vermischt und mittels einer Sandmühle dispergiert. Diese Pigmentpaste wird unter Rühren mit den übrigen Bestandteilen vermischt und in gleicher Weise wie im Beispiel 1 bis 9 weiterverarbeitet.

### Beispiel 12

Die Polyurethandispersion, das Aluminiumpigment, Butylglykol und Wasser werden gemischt und 30 Minuten gerührt. Danach wird auf einer Auslaufzeit von 14 bis 15 Sekunden im DIN-Becher 4 eingestellt.

### Applikation der Überzugsmittel

Die erhaltenen Überzugsmittel werden auf jeweils 4 gebonderte Stahlblechte aufgespritzt. Nach einer Ablüftzeit von 15 Minuten bei Raumtemperatur werden unpigmentierte Überzugsmittel (Decklacke 1, 2, 3 und 4) aufgebracht, die folgendermaßen hergestellt worden sind:

### Decklack 1

### (a) Herstellung eines Acrylatcopolymerisats

In ein Reaktionsgefäß, das mit einem Thermometer, einem Rührer, einem Rückflußkühler und einem Tropftrichter ausgestattet ist, werden 166 Teile n-Butanol, 287 Teile Toluol und 1507 Teile Ethylenglykolmonoethyletheracetat gegeben. In den Tropftrichter wird eine Lösung von 868 Teilen n-Butylmethacrylat, 812 Teilen Methylmethacrylat, 32,8 Teilen Methacrylsäure, 287,2 Teilen Hydroxypropylmethacryl und 40 Teilen Cumolhydroperoxid gefüllt. Das Reaktionsgemisch wird unter Rühren erhitzt, und, wenn die Temperatur der Lösungsmittel 136°C erreicht hat, wird mit der Zugabe der Monomeren-Katalysatorlösung begonnen. Die Monomeren-Katalysatorlösung wird im Verlauf von 45 Minuten zugefügt, während die Temperatur zwischen 127 und 136°C gehalten wird. Nach 2-stündigem zusätzlichen Erhitzen beträgt die Temperatur 136°C und die Gardner-Holdt-Viskosität bei 25°C einer Probe der Lösung, die mit Ethylenglykolmonoethyletheracetat auf einen Festkörpergehalt von 30 % erniedrigt worden ist, K-L. Nach Erhitzen während weiterer 2 stunden auf 136,1 bis 136,7°C beträgt die Viskosität, an der Probe mit einem Festkörpergehalt von 30 % bestimmt, P-Q. Während 2 Stunden und 5 Minuten fortgesetzten Erhitzen erhöht die Viskosität auf Q-R. Das Erhitzen wird unterbrochen und die Polymerlösung filtriert. Die erhaltene Lösung weist eine Gardner-Holdt-Viskosität von Z_{3⁻} Z₄ bei 25°C und bei einem Feststoffgehalt in den Polymerisationslösungsmitteln (84,91 % Ethylenglykolmonoethyletheracetat, 5,53 % n-Butanol und 9,56 % Toluol) von 39,9 ein Gewicht von 1,009 kg/l, eine Säurezahl auf Feststoffbasis von 17,2 und eine Gardner-Farbe von 1 auf. Die relative Viskosität des Copolymerisats beträgt 1,1434.

### (b) Herstellung des unpigmentierten Überzugsmittels

144 Teile der einen Gehalt an nicht flüchtigen Stoffen von 45 Gew.-% aufweisenden Lösung des Acrylatcopolymerisats werden mit 58 Teilen eines butylierten Methylolmelaminharzes (Feststoffgehalt 60 Gew.%) gemischt. Der Gehalt der sich ergebenden Mischung an nicht flüchtigen Stoffen wird mit Xylol auf 40 Gew.% verringert; man erhält so eine transparente Überzugsmasse mit einer Viskosität von 28 bis 32 Sekunden, gemessen in einem Nr. 4-Ford-Becher. Dann wird mit einer Mischung aus 60 Gew.-Teilen Xylol und 40 Gew.-Teilen Butylacetat auf eine Viskosität von 17 Sekunden eingestellt.

### Decklack 2

### (a) Herstellung einer Acrylharzlösung

Eine übliche Vorrichtung zur Herstellung eines Acrylharzes mit einem Rührer, einem Thermometer, einem Rückflußkühler und einem Tropftank wird mit 67 Teilen Petroliumlösungsmittel (Trimethylbenzol enthaltende Erdölfraktion mit einem Siedebereich von etwa 160°C bis 200°C) beschickt. Nachdem die Temperatur 132°C erreicht hat, wird ein Monomergemisch, bestehend aus 60 Teilen n-Butylmethacrylat, 19 Teilen 2-Ethylhexylmethacrylat, 18 Teilen Hydroxyethylmethacrylat, 3 Teilen Methacrylsäure und 1,9 Teilen α,α'-Azobisisobutyronitril, tropfenweise im Lauf von 3 Std. zugesetzt.

Nach Zugabe des Monomergemisches wird das Gemisch 1 Stunde lang gerührt, während die Temperatur des Reaktors bei 132°C gehalten wird. Sodann wird ein Gemisch, bestehend aus 10 Teilen des obigen Petroleumlösungsmittels und 0,8 Teilen 2,2'-Azobis-2,4-dimethylvaleronitril, im Verlauf von 2 Stunden zugesetzt. Die Reaktion wird 2 stunden lang bei 132°C durchgeführt. Hierauf werden 3 Teile Petroleumlösungsmittel und 15 Teile n-Butanol zugesetzt, wodurch eine Acrylharzlösung erhalten wird. Das feste Harz der Acrylharzlösung hat ein zahlendurchschnittliches Molekulargewicht (gemessen durch eine osmotische Dampfdruckmethode) von 10200 und einen Glasübergangspunkt (gemessen durch ein Dilatometer) von 20°C. Die Lösung hat einen Festkörpergehalt von 50,0 % und eine Viskosität (gemessen mit einem Gardner-Blasenviskosimeter bei 25°C) von K.

### (b) Herstellung eines unpigmentierten Überzugsmittels

Durch Dispergieren von 140 Gew.-Teilen der obigen Acrylharzlösung, 50 Gew.-Teilen einer Lösung eines mit n-Butanol modifizierten Melaminharzes in n-Butanol/Xylol mit einem Festkörpergehalt von 60 Gew.-% und 0,1 Gew.-Teilen einer 1 %igen Lösung eines Siliconöls in Xylol wird ein zweites unpigmentiertes Überzugsmittel (Decklack 2) hergestellt.

### Decklack 3

### (a) Herstellung eines Acrylatharzes

In einem mit Thermometer, Rührer, Rückflußkühler und Tropftrichter ausgestatteten Reaktionsgefäß werden 18,4 Gew.-Teile Xylol auf 140°C erhitzt. Es wird unter Inertgasatmosphäre gearbeitet und ein Gemisch aus 7,6 Gew.-Teilen 2-Hydroxypropyl-methacrylat, 0,6 Gew.-Teilen Methacrylsäure, 19,7 Gew.-Teilen 2-Äthylhexylacrylat, 11,6 Gew.-Teilen Methylmethacrylat und 9,8 Gew.-Teilen n-Butylmethacrylat und ein Gemisch aus 0,5 Gew.-Teilen Di-tertiär-Butylperoxid und 2,0 Gew.-Teilen Xylol innerhalb von 4 Stunden unter Rühren gleichmäßig zugegeben und die Temperatur des Reaktionsgemisches auf 140°C gehalten. Danach wird eine weitere halbe Stunde bei 140°C gerührt und ein Gemisch von 0,2 Gew.-Teilen Di-tertiär-Butylperoxid und 1,0 Gew.-Teilen Xylol langsam zugegeben. Nach weiteren 30 Minuten ist ein Festkörpergehalt von 69,6 % (gemessen an einem Überzug bei einer Trocknung von 15 Minuten bei 180°C im Umluftofen) erreicht. Das Reaktionsgemisch wird bei 120°C abgekühlt und mit 28,6 Gew.-Teilen Xylol verdünnt. Es resultiert eine Acrylatharzlösung mit einem Festkörpergehalt von 50 Gew.-% und einer Viskosität von 560 mPa.s (gemessen im Platte-Kegel-Viskosimeter) und einer Säurezahl von 9,8 (bezogen auf das Festharz).

### (b) Herstellung eines unpigmentierten Überzugsmittels

Zur Herstellung des unpigmentierten Überzugsmittels wird zunächst eine Melaminharzlösung hersgestellt.

### Herstellung eines Melaminharzes

Nach bekannten Verfahren stellt man ein Melamin-Formaldehydkondensatharz her, indem man ein Gemisch von 630 Teilen Melamin und 2435 Teilen wäßriger Formaldehydlösung (mit 40 Volumen % Formaldehyd) mit Natronlauge auf einen pH-Wert von 7,0 eingestellt und solange auf 90°C erhitzt, bis bei einer Probe nach Verdünnen mit Wasser auf das doppelte Volumen Harz ausfällt. Man destilliert dann im Vakuum 1 300 Teile Wasser ab und gibt 4 000 Teile n-Butanol und 500 Teile konzentrierte Salzsäure zu. Nachdem man die Mischung 30 Minuten auf 40°C gehalten hat, wird das veretherte Produkt mit 250 g Natriumcarbonat neutralisiert. Nach Abtrennen der butanolhaltigen Schicht wird im Vakuum entwässert und durch Abdestillieren von Lösungsmittel ein Festkörpergehalt von 60 % eingestellt.

Aus 50 Gew.-Teilen des eben beschriebenen Acrylatharzes, 30 Gew.-Teilen der obigen Melaminharzlösung, 15 Gew.-Teilen Xylol und 5 Gew.-Teilen Butylacetat wird ein unpigmentiertes Überzugsmittel (Decklack 3) hergestellt.

### Decklack 4

### (a) Herstellung eines Polyesterharzes

Es wird ein gesättigter Polyester hergestellt aus
1,0 Mol Hexahydrophthalsäureanhydrid,
0,25 Mol Trimethylolpropan,
0,6 Mol Äthyl-Butyl-Propandiol-1,3,
0,2 Mol 2,2-Methylphenyl-Propandiol-1,3.

Die genannten Rohstoffe werden in den angegebenen Mengen in ein Reaktionsgefäß mit Füllkörperkolonne, absteigendem Destillationskühler und Rührer eingewogen. Zu dem Reaktionsgemisch werden 10 g einer höher siedenden Aromatenfraktion (Siedeintervall: 150°C bis 170°C) gegeben und dann erhitzt, wobei die Temperatur im Reaktionsgefäß so geführt wird, daß sie am Kopf der Füllkörperkolonne 105°C nicht überschreitet. Es wird unter Stickstoffatmosphäre gearbeitet. Nach 10 Stunden erreicht das Reaktionsgemisch eine Säurezahl von 11 und eine Viskosität von 320 mPas (gemessen als 60 %ige Lösung in Xylol im ICI-Platte-Kegel-Viskosimeter). Der erhaltene gesättigte Polyester wird mit Xylol angelöst zu einer Lösung mit einem Festkörpergehalt von 60 %. Die Hydroxylzahl des Harzes beträgt 78.

### (b) Herstellung eines unpigmentierten Überzugsmittels

55 g der nach (a) erhaltenen Harzlösung werden mit 30 g einer 55 %igen Lösung eines handelsüblichen reaktiven mit Butanol teilveretherten Melamin-Formaldehyd-Kondensationsharzes in Butanol/ Xylol (2 : 1) versetzt und mit 15 g eines Lösungsmittelgemisches aus Äthylglykolacetat und Butylglykolacetat 1 : 1 verdünnt und durch Rühren gut gemisch. Der entstandene Klarlack hat einen Festkörpergehalt von 49 % und eine Auslaufzeit von 43 Sekunden im Auslaufbecher mit 4 mm-Auslaufdüse nach DIN 53 211.

Nach dem Aufbringen der transparenten Überzugsmittel werden die erhaltenen Zweischichtüberzüge in einem Umluftofen eingebrannt. Die Einbrennbedingungen waren:
Decklack 1 : 30 min, 90°C
Decklack 2 : 20 min, 150°C
Decklack 3 : 30 min, 130°C
Decklack 4 : 30 min, 130°C

Die Temperaturangaben bedeuten jeweils Objekttemperaturen. Es resultieren Zweischichtüberzüge mit ausgezeichneten Eigenschaften.

## Patentansprüche

1. Verfahren zur Herstellung eines Mehrschichtüberzuges, bei dem auf ein Substrat als Basisschicht ein wasserverdünnbares Überzugsmittel aufgebracht wird, das Pigmente, mindestens ein filmbildendes Bindemittel und gegebenenfalls Verlaufsmittel, Thixotropierungsmittel, Füllstoffe, organische Lösungsmittel und andere übliche Hilfsstoffe enthält, darauf nach einer Ablüftzeit als Deckschicht ein transparentes Überzugsmittel aufgebracht und anschließend das beschichtete Substrat erhitzt wird, dadurch gekennzeichnet, daß das überzugsmittel für die Basisschicht als Bindemittel eine an sich bekannte, wäßrige Polyurethandispersion enthält, die hergestellt worden ist durch Umsetzung
(A) eines linearen Polyether- und/oder Polyesterdiols mit endständigen Hydroxylgruppen und einem Molekulargewicht von 400 bis 3000 mit
(B) einem Diisocyanat und
(C) einer Verbindung, die zwei gegenüber Isocyanatgruppen reaktive Gruppen und mindestens eine zur Anionenbildung befähigte Gruppe aufweist, wobei die zur Anionenbildung befähigte Gruppe vor der Umsetzung mit einem tertiären Amin neutralisiert worden ist
zu einem Zwischenprodukt mit endständigen Isocyanatgruppen, Überführung des aus (A), (B) und (C) erhaltenen Zwischenprodukts in eine überwiegend wäßrige Phase und
(D) Umsetzung der noch erhaltenen Isocyanatgruppen mit einem Di- und/oder Polyamin mit primären und/oder sekundären Aminogruppen.

2. Verfahren nach Anspruch 1, dadurch gekennzeichnet, daß bei der Herstellung der Polyurethandispersion das aus den Komponenten (A), (B) und (C) erhaltene Zwischenprodukt so hergestellt worden ist, daß aus den Komponenten (A) und (B) ein erstes Zwischenprodukt mit endständigen Isocyanatgruppen gebildet worden ist, das dann mit der Komponente (C) zu dem in Anspruch 1 genannten Zwischenprodukt weiter umgesetzt worden ist.

3. Verfahren nach Anspruch 1 oder 2, dadurch gekennzeichnet, daß für die Herstellung der Polyurethan-dispersion anstelle eines Teils der Komponente (C) eine Verbindung (E) verwendet worden ist, die zwei gegenüber Isocyanatgruppen reaktive Gruppen aufweist, jedoch frei ist von zur Anionenbildung befähigten Gruppen.

4. Verfahren nach den Ansprüchen 1 bis 3, dadurch gekennzeichnet, daß das überzugsmittel für die Basisschicht als zusätzliche Bindemittelkomponente ein wasserverdünnbares Melaminharz in einem Anteil von bis 80 Gew.-%, bezogen auf den Festkörpergehalt der Polyurethandispersion, enthält.

5. Verfahren nach Anspruch 4, dadurch gekennzeichnet, daß der Anteil des Melaminharzes, bezogen auf den Festkörpergehalt der Polyurethandispersion 20 bis 60 Gew.-% beträgt.

6. Verfahren nach Anspruch 4 oder 5, dadurch gekennzeichnet, daß das Überzugsmittel für die Basisschicht als weitere Bindemittelkomponente ein wasserverdünnbares Polyesterharz und/oder ein wasserverdünnbares Polyacrylatharz enthält, wobei das Gewichtsverhältnis Melaminharz : Polyesterharz und/oder Polyacrylatharz 2 : 1 bis 1 : 4 beträgt und der Gesamtanteil an Melaminharz, Polyester- und Polyacrylatharz, bezogen auf den Festkörpergehalt der Polyurethandispersion, 1 bis 80 Gew.-% beträgt.

7. Verfahren nach Anspruch 6, dadurch gekennzeichnet, daß der Anteil an Melaminharz, Polyester- und Polyacrylatharz 20 bis 60 Gew.-%, bezogen auf den Festkörpergehalt der Polyurethandispersion, beträgt.

8. Verfahren nach Anspruch 1 bis 3, dadurch gekennzeichnet, daß das Überzugsmittel für die Basisschicht als zusätzliche Bindemittelkomponenten ein blockiertes Polyisocyanat, zusammen mit einem wasserverdünnbaren Polyesterharz und/oder einem wasserverdünnbaren Polyacrylatharz enthält, wobei der Anteil an Polyisocyanat, Polyesterharz und/oder Polyacrylatharz insgesamt 1 bis 80 Gew.-%, bezogen auf den Festkörpergehalt der Polyurethandispersion, beträgt.

9. Verfahren nach Anspruch 1 bis 8, dadurch gekennzeichnet, daß das Überzugsmittel für die Basisschicht 0,5 bis 25 Gew.-% Metallpigmente, bezogen auf den gesamten Festkörpergehalt an Bindemittel enthält.

10. Substrat, beschichtet mit einem Mehrschichtüberzug, der erhalten worden ist durch Aufbringung eines wasserverdünnbaren Überzugsmittels als Basisschicht, das Pigmente, mindestens ein filmbildendes Bindemittel und gegebenenfalls Verlaufsmittel, Thixotropierungsmittel, Füllstoffe, organische Lösungsmittel und andere Hilfsstoffe enthalten hat, Aufbringung eines transparenten Überzugsmittels als Deckschicht und anschließende Erhitzung des beschichteten Substrats, dadurch gekennzeichnet, daß das Überzugsmittel für die Basisschicht als Bindemittel eine an sich bekannte, wäßrige Polyurethan-dispersion mit einer Säurezahl des Polyurethanharzes von 5 bis 70 enthalten hat, die hergestellt worden ist durch Umsetzung
(A) eines linearen Polyether- und/oder Polyesterdiols mit endständigen Hydroxylgruppen und einem Molekulargewicht von 400 bis 3000 mit
(B) einem Diisocyanat und
(C) einer Verbindung, die zwei gegenüber Isocyanatgruppen reaktive Gruppen und mindestens eine zur Anionenbildung befähigte Gruppe aufweist, wobei die zur Anionenbildung befähigte Gruppe vor der Umsetzung mit einem tertiären Amin neutralisiert worden ist
zu einem Zwischenprodukt mit endständigen Isocyanatgruppen, Überführung des aus (A), (B) und (C) erhaltenen Zwischenprodukts in eine überwiegend wäßrige Phase und
(D) Umsetzung der Isocyanatgruppen mit einem Diund/oder Polyamin mit primären und/oder sekundären Aminogruppen.

11. Verwendung eines wasserverdünnbaren Überzugsmittels für die Herstellung einer Basisschicht eines Mehrschichtüberzuges, wobei das wasserverdünnbare Überzugsmittel als Bindemittel eine an sich bekannte, wäßrige Polyurethandispersion, die durch stufenweise Umsetzung von
(A) linearen Polyether- und/oder Polyesterdiolen mit endständigen Hydroxylgruppen und einem Molekulargewicht von 400 bis 3000,
(B) Diisocyanaten,
(C) Verbindungen, die zwei gegenüber Isocyanat reaktive Gruppen und mindestens eine zur Anionenbildung befähigte Gruppe aufweisen, wobei die zur Anionenbildung befähigte Gruppe vor der Umsetzung neutralisiert worden ist,
(D) Di- und/oder Polyaminen mit primären und/oder sekundären Aminogruppen,
Lösen oder Dispergieren der Polyurethane in wäßrigorganischen Lösungsmitteln und Entfernen der organischen Lösungsmittelanteile erhalten worden ist und außerdem noch Pigmente und gegebenenfalls Verlaufsmittel, Thixotropierungsmittel, Füllstoffe, organische Lösungsmittel und andere übliche Hilfsstoffe enthält und wobei bei der Herstellung der Polyurethandispersion die stufenweise Umsetzung der Komponenten (A) bis (D) so durchgeführt worden ist, daß
- zunächst die Komponenten (A), (B) und (C) zu einem Zwischenprodukt mit endständigen Isocyanatgruppen umgesetzt worden sind, wobei die zur Anionenbildung befähigten Gruppen der Komponente (C) mit einem tertiären Amin neutralisiert worden sind
- dieses Zwischenprodukt anschließend in eine überwiegend wäßrige Phase überführt und die Isocyanatgruppen mit der Komponente (D) umgesetzt worden sind
- ein Polyurethanharz mit einer Säurezahl von 5 bis 70 erhalten worden ist.

12. Verwendung nach Anspruch 11, dadurch gekennzeichnet, daß bei der Herstellung der Polyurethandispersion die stufenweise Umsetzung der Komponenten (A) bis (D) so durchgeführt worden ist, daß aus den Komponenten (A) und (B) ein erstes Zwischenprodukt mit endständigen Isocyanatgruppen gebildet worden ist, das dann mit der Komponente (C) zu dem in Anspruch 11 genannten Zwischenprodukt mit endständigen Isocyanatgruppen umgesetzt worden ist.

13. Verwendung nach Anspruch 11 oder 12, dadurch gekennzeichnet, daß für die Herstellung der Polyurethandispersion anstelle eines Teils der Komponente (C) eine Verbindung (E) verwendet worden ist, die zwei gegenüber Isocyanatgruppen reaktive Gruppen aufweist, jedoch frei ist von zur Anionenbildung befähigten Gruppen.

14. Verwendung nach Anspruch 11 bis 13, dadurch gekennzeichnet, daß das Überzugsmittel als zusätzliche Bindemittelkomponente ein wasserverdünnbares Melaminharz in einem Anteil von 1 bis 80 Gew.-%, bezogen auf den Festkörpergehalt der Polyurethandispersion, enthält.

15. Verwendung nach Anspruch 14, dadurch gekennzeichnet, daß der Anteil des Melaminharzes, bezogen auf den Festkörpergehalt der Polyurethandispersion 20 bis 60 Gew.-% beträgt.

16. Verwendung nach Anspruch 14 oder 15, dadurch gekennzeichnet, daß das überzugsmittel als weitere Bindemittelkomponente ein wasserverdünnbares Polyesterharz und/oder ein wasserverdünnbares Polyacrylatharz enthält, wobei das Gewichtsverhältnis Melaminharz : Polyesterharz und/oder Polyacrylatharz 2 : 1 bis 1 : 4 beträgt und der Gesamtanteil an Melaminharz, Polyester- und Polyacrylatharz, bezogen auf den Festkörpergehalt der Polyurethan-dispersion, 1 bis 80 Gew.-% beträgt.

17. Verwendung nach Anspruch 16, dadurch gekennzeichnet, daß der Anteil an Melaminharz, Polyester- und Polyacrylatharz 20 bis 60 Gew.-%, bezogen auf den Festkörpergehalt der Polyurethandispersion, beträgt.

18. Verwendung nach Anspruch 11 bis 13, dadurch gekennzeichnet, daß das Überzugsmittel als zusätzliche Bindemittelkomponente ein blockiertes Polyisocyanat, zusammen mit einem wasserverdünnbaren Polyesterharz und/oder einem wasserverdünnbaren Polyacrylatharz, enthält, wobei der Anteil an Polyisocyanat, Polyesterharz und/oder Polyacrylatharz insgesamt 1 bis 80 Gew.-%, bezogen auf den Festkörpergehalt der Polyurethandispersion, beträgt.

19. Verwendung nach Anspruch 11 bis 18, dadurch gekennzeichnet, daß das Überzugsmittel 0,5 bis 25 Gew.-% Metallpigmente, bezogen auf den gesamten Festkörpergehalt an Bindemitteln enthält.

## Claims

1. Process for preparing a multilayer coating, in which a substrate is coated with a base layer of water-dilutable coating agent which contains pigments, at least one film-forming binder and, if desired, flow-control agents, thixotroping agents, fillers, organic solvents and other customary auxiliaries, a topcoat of a transparent coating agent is applied thereto after an airdrying period and the coated substrate is then heated, characterized in that the coating agent for the base layer contains as a binder an aqueous polyurethane dispersion known per se which has been prepared by reacting
(A) a linear polyetherdiol and or polyesterdiol having terminal hydroxyl groups and a molecular weight of 400 to 3000 with
(B) a diisocyanate and
(C) a compound which has two groups which are reactive towards isocyanate groups and at least one group which is capable of forming an anion and which has been neutralized with a tertiary amine before the reaction,
to form an intermediate product having terminal isocyanate groups, converting the intermediate product, obtained from (A), (B) and (C), into a predominantly aqueous phase and
(D) reacting the isocyanate groups which are still present with a diamine and/or polyamine having primary and/or secondary amino groups.

2. Process according to Claim 1, characterized in that, in the preparation of the polyurethane dispersion, the intermediate obtained from components (A), (B) and (C) was prepared in such a way that components (A) and (B) combined to form a first intermediate having terminal isocyanate groups which was then further reacted with component (C) to form the intermediate mentioned in Claim 1.

3. Process according to Claim 1 or 2, characterized in that a compound (E) which has two groups which are reactive towards isocyanate groups but which is free of groups capable of forming an anion is used instead of some of component (C) for preparing the polyurethane dispersion.

4. Process according to Claims 1 to 3, characterized in that the coating agent for the base layer contains as an additional binder component a water-dilutable melamine resin in an amount of 1 to 80% by weight, relative to the solids content of the polyurethane dispersion.

5. Process according to Claim 4, characterized in that the melamine resin content, relative to the solids content of the polyurethane dispersion, is 20 to 60% by weight.

6. Process according to Claim 4 or 5, characterized in that the coating agent for the base layer contains as a further binder component a water-dilutable polyester resin and/or a water-dilutable polyacrylate resin, where the weight ratio of melamine resin to polyester and/or polyacrylate resin is 2 : 1 to 1 : 4 and the total melamine resin and polyester and polyacrylate resin content, relative to the solids content of the polyurethane dispersion, is 1 to 80% by weight.

7. Process according to Claim 6, characterized in that the melamine resin and polyester and polyacrylate resin content is 20 to 60% by weight, relative to the solids content of the polyurethane dispersion.

8. Process according to Claim 1 to 3, characterized in that the coating agent for the base layer contains as an additional binder component a blocked polyisocyanate together with a water-dilutable polyester resin and/or water-dilutable polyacrylate resin, where the polyisocyanate and the polyester resin and/or the polyacrylate resin content is in total 1 to 80% by weight, relative to the solids content of the polyurethane dispersion.

9. Process according to Claim 1 to 8, characterized in that the coating agent for the base layer contains 0.5 to 25% by weight of metal pigments, relative to the total binder solids content.

10. Substrate coated with a multilayer coating which has been obtained by applying, as a base layer, a water-dilutable coating agent which contained pigments, at least one film-forming binder and, if desired, flow-control agents, thixotroping agents, fillers, organic solvents and other auxiliaries, by applying a transparent coating agent as a topcoat and subsequently heating the coated substrate, characterized in that the coating agent for the base layer included as binder a conventional aqueous polyurethane dispersion having a polyurethane resin acid number of 5 to 70 and having been prepared by reacting
(A) a linear polyetherdiol and or polyesterdiol having terminal hydroxyl groups and a molecular weight of 400 to 3000 with
(B) a diisocyanate and
(C) a compound which has two groups which are reactive towards isocyanate groups and at least one group which is capable of forming an anion and which has been neutralized with a tertiary amine before the reaction,
to form an intermediate product having terminal isocyanate groups, converting the intermediate product, obtained from (A), (B) and (C), into a predominantly aqueous phase and
(D) reacting the isocyanate groups with a diamine and/or polyamine having primary and/or secondary amino groups.

11. Use of a water-dilutable coating agent for preparing the base layer of a multilayer coating, the water-dilutable coating agent including as binder a conventional aqueous polyurethane dispersion obtained by stepwise reaction of
(A) linear polyether- and/or polyester-diols having terminal hydroxyl groups and a molecular weight of 400 to 3000,
(B) diisocyanates,
(C) compounds which have two groups which are reactive towards isocyanate and at least one group which is capable of anion formation, the group capable of anion formation having been neutralized before the reaction,
(D) di- and/or polyamines having primary and/or secondary amino groups,
dissolving or dispersing the polyurethanes in aqueous-organic solvents and removing the organic solvent portions, and additionally pigments and, if desired, flow-control agents, thixotroping agents, fillers, organic solvents and other customary auxiliaries, the stepwise reaction of components (A) to (D) in the course of the preparation of the polyurethane dispersion having been carried out by
- first reacting components (A), (B) and (C) to form an intermediate having terminal isocyanate groups, the groups of component (C) capable of anion formation having been neutralized with a tertiary amine
- then transferring this intermediate into a predominantly aqueous phase and reacting the isocyanate groups with component (D)
- obtaining a polyurethane resin having an acid number of 5 to 70.

12. Use according to Claim 11, characterized in that, in the preparation of the polyurethane dispersion, the stagewise reaction of components (A) to (D) was carried out in such a way that components (A) and (B) combined to form a first intermediate having terminal isocyanate groups which was then further reacted with component (C) to form the intermediate mentioned in Claim 11.

13. Use according to Claim 11 or 12, characterized in that a compound (E) which has two groups which are reactive towards isocyanate groups but which is free of groups capable of forming an anion has been used instead of some of component (C) for preparing the polyurethane dispersion.

14. Use according to Claim 11 to 13, characterized in that the coating agent contains as an additional binder component a water-dilutable melamine resin in an amount of 1 to 80% by weight, relative to the solids content of the polyurethane dispersion.

15. Use according to Claim 14, characterized in that the melamine resin content, relative to the solids content of the polyurethane dispersion, is 20 to 60% by weight.

16. Use according to Claim 14 or 15, characterized in that the coating agent contains as a further binder component a water-dilutable polyester resin and/or a water-dilutable polyacrylate resin, where the weight ratio of melamine resin to polyester and/or polyacrylate resin is 2 : 1 to 1 : 4 and the total melamine resin and polyester and polyacrylate resin content, relative to the solids content of the polyurethane dispersion, is 1 to 80% by weight.

17. Use according to Claim 16, characterized in that the melamine resin and polyester and polyacrylate resin content is 20 to 60% by weight, relative to the solids content of the polyurethane dispersion.

18. Use according to Claim 11 to 13, characterized in that the coating agent contains as an additional binder component a blocked polyisocyanate together with a water-dilutable polyester resin and/or a water-dilutable polyacrylate resin, where the polyisocyanate and the polyester resin and/or the polyacrylate resin content is in total 1 to 80% by weight, relative to the solids content of the polyurethane dispersion.

19. Use according to Claim 11 to 18, characterized in that the coating agent contains 0.5 to 25% by weight of metal pigments, relative to the total binder solids content.

## Revendications

1. Procédé pour l'obtention d'un revêtement multicouche, dans lequel on applique sur un subjectile, en tant que couche de base, une composition de revêtement pouvant être diluée à l'eau, qui contient des pigments, au moins un liant filmogène et éventuellement des agents d'étalement, agents de thixotropie, charges, solvants organiques et d'autres adjuvants usuels, sur lequel on applique, après un temps d'évaporation, un produit de revêtement transparent, en tant que couche de recouvrement, et on chauffe ensuite le subjectile revêtu, caractérisé en ce que la composition de revêtement pour la couche de base contient, en tant que liant, une dispersion aqueuse de polyuréthanne connue en soi, qui est préparée par la réaction
(A) d'un polyéther- et/ou polyesterdiol linéaire à groupes hydroxy en bout de chaîne et ayant une masse moléculaire de 400 à 3 000, avec
(B) un diisocyanate et
(C) un composé qui comporte deux groupes réactifs vis-à-vis de groupes isocyanate et au moins un groupe apte à la formation d'anions, le groupe apte à la formation d'anions ayant été neutralisé avec une amine tertiaire, avant la réaction,
conduisant à un produit intermédiaire à groupes isocyanate en bout de chaîne, le transfert du produit intermédiaire, obtenu à partir de (A), (B) et (C), dans une phase essentiellement aqueuse, et
(D) la réaction des groupes isocyanate encore présents avec une diamine et/ou une polyamine à groupes amino primaires et/ou secondaires.

2. Procédé selon la revendication 1, caractérisé en ce que, lors de la préparation de la dispersion de polyuréthanne, le produit intermédiaire obtenu à partir des composants (A), (B) et (C) a été préparé de manière qu'à partir des composants (A) et (B) a été formé un premier produit intermédiaire comportant des groupes isocyanate en bout de chaîne, qui a été ensuite mis à nouveau en réaction avec le composant (C), pour donner le produit intermédiaire mentionné dans la revendication 1.

3. Procédé selon la revendication 1 ou 2, caractérisé en ce que, pour la préparation de la dispersion de polyuréthanne, on a utilisé, au lieu d'une partie du composant (C), un composé (E) qui comporte des groupes réactifs vis-à-vis de groupes isocyanate mais est exempt de groupes aptes à la formation d'anions.

4. Procédé selon les revendications 1 à 3, caractérisé en ce que la composition de revêtement pour la couche de base contient, en tant que composant de type liant supplémentaire, en une proportion allant jusqu'ã 80 % en poids, par rapport à la teneur en matière sèche de la dispersion de polyuréthanne, une résine de mélamine pouvant être diluée à l'eau.

5. Procédé selon la revendication 4, caractérisé en ce que la proportion de la résine de mélamine, par rapport à la teneur en matière sèche de la dispersion de polyuréthanne, va de 20 à 60 % en poids.

6. Procédé selon la revendication 4 ou 5, caractérisé en ce que la composition de revêtement pour la couche de base contient, en tant qu'autre composant de type liant, une résine polyester pouvant être diluée à l'eau et/ou une résine polyacrylate pouvant être diluée à l'eau, le rapport pondéral résine de malémine:résine polyester et/ou résine polyacrylate allant de 2:1 à 1:4, et la proportion totale de résine de mélamine, résine polyester et polyacrylate allant de 1 à 80 % en poids, par rapport à la teneur en matière sèche de la dispersion de polyuréthanne.

7. Procédé selon la revendication 6, caractérisé en ce que la proportion de résine de mélamine, résine polyester et polyacrylate va de 20 à 60 % en poids, par rapport à la teneur en matière sèche de la dispersion de polyuréthanne.

8. Procédé selon l'une quelconque des revendications 1 à 3, caractérisé en ce que la composition de revêtement pour la couche de base contient, en tant que composants de type liant supplémentaires, un polyisocyanate bloqué, conjointement avec une résine polyester pouvant être diluée à l'eau et/ou une résine polyacrylate pouvant être diluée à l'eau, la proportion de polyisocyanate, résine polyester et/ou résine polyacrylate allant au total de 1 à 80 % en poids, par rapport à la teneur en matière sèche de la dispersion de polyuréthanne.

9. Procédé selon l'une quelconque des revendications 1 à 8, caractérisé en ce que la composition de revêtement pour la couche de base contient de 0,5 à 25 % en poids de pigments métalliques, par rapport à la teneur totale en matière sèche du liant.

10. Subjectile, revêtu avec un revêtement multicouche qui a été obtenu par application d'une composition de revêtement pouvant être diluée à l'eau, en tant que couche de base, qui a contenu des pigments, au moins un liant filmogène et éventuellement des agents d'étalement, agents de thixotropie, charges, solvants organiques et d'autres adjuvants, application d'un produit de revêtement transparent, en tant que couche de recouvrement, et ensuite chauffage du subjectile revêtu, caractérisé en ce que la composition de revêtement pour la couche de base a contenu, en tant que liant, une dispersion aqueuse de polyuréthanne connue en soi, ayant un indice d'acide de la résine polyuréthanne allant de 5 à 70, qui a été préparée par la réaction
(A) d'un polyéther- et/ou polyesterdiol linéaire à groupes hydroxy en bout de chaîne et ayant une masse moléculaire de 400 à 3 000, avec
(B) un diisocyanate et
(C) un composé qui comporte deux groupes réactifs vis-à-vis de groupes isocyanate et au moins un groupe apte à la formation d'anions, le groupe apte à la formation d'anions ayant été neutralisé avec une amine tertiaire, avant la réaction,
conduisant à un produit intermédiaire à groupes isocyanate en bout de chaîne, le transfert du produit intermédiaire, obtenu à partir de (A), (B) et (C), dans une phase essentiellement aqueuse, et
(D) la réaction des groupes isocyanates avec une diamine et/ou une polyamine à groupes amino primaires et/ou secondaires.

11. Utilisation d'une composition de revêtement pouvant être diluée à l'eau, pour la production d'une couche de base d'un revêtement multicouche, la composition de revêtement pouvant être diluée à l'eau contenant, en tant que liant, une dispersion aqueuse de polyuréthanne, connue en soi qui a été obtenue par la réaction par étapes
(A) de polyéther- et/ou polyesterdiols linéaires comportant des groupes hydroxy en bout de chaîne et ayant une masse moléculaire de 400 à 3 000,
(B) de diisocyanates et
(C) de composés qui comportent deux groupes réactifs vis-à-vis du groupe isocyanate et au moins un groupe apte à la formation d'anions, le groupe apte à la formation d'anions ayant été neutralisé avant la réaction,
(D) de diamines et/ou de polyamines comportant des groupes amino primaires et/ou secondaires,
la dissolution ou la dispersion des polyuréthannes dans des solvants aqueux-organiques et l'élimination des fractions de solvants organiques, et en outre des pigments et éventuellement des agents d'étalement, agents de thixotropie, charges, solvants organiques et autres adjuvants usuels, et, lors de la préparation de la dispersion de polyuréthanne, la réaction par étapes des composants (A) à (D) ayant été effectuée de la façon suivante:
- on a d'abord fait réagir les composants (A), (B) et (C) pour obtenir un produit intermédiaire comportant des groupes isocyanate en bout de chaîne, les groupes aptes à la formation d'anions du composant (C) ayant été neutralisés avec une amine tertiaire,
- ce produit intermédiaire a été ensuite transféré dans une phase essentiellement aqueuse, et les groupes isocyanate ont été mis en réaction avec le composant (D) et
- on a obtenu une résine polyuréthanne ayant un indice d'acide allant de 5 à 70.

12. Utilisation selon la revendication 11, caractérisée en ce que, dans la préparation de la dispersion de polyuréthanne, la réaction par étapes des composants (A) à (D) a été effectuée de manière qu'à partir des composants (A) et (B) a été formé un premier produit intermédiaire comportant des groupes isocyanate en bout de chaîne, qui a été ensuite mis en réaction avec le composant (C), pour donner le produit intermédiaire à groupes isocyanate en bout de chaîne, mentionné dans la revendication 11.

13. Utilisation selon la revendication 11 ou 12, caractérisée en ce que, pour la préparation de la dispersion de polyuréthanne, on a utilisé, au lieu d'une partie du composant (C), un composé (E) qui comporte deux groupes réactifs vis-à-vis de groupes isocyanate mais est exempt de groupes aptes à la formation d'anions.

14. Utilisation selon les revendications 11 à 13, caractérisée en ce que la composition de revêtement contient, en tant que composant de type liant supplémentaire, en une proportion de 1 à 80 % en poids, par rapport à la teneur en matière sèche de la dispersion de polyuréthanne, une résine de mélamine pouvant être diluée à l'eau.

15. Utilisation selon la revendication 14, caractérisée en ce que la proportion de la résine de mélamine, par rapport à la teneur en matière sèche de la dispersion de polyuréthanne, va de 20 à 60 % en poids.

16. Utilisation selon la revendication 14 ou 15, caractérisée en ce que la composition de revêtement contient, en tant qu'autre composant de type liant, une résine polyester pouvant être diluée à l'eau et/ou une résine polyacrylate pouvant être diluée à l'eau, le rapport pondéral résine de mélamine:résine polyester et/ou résine polyacrylate allant de 2:1 à 1:4, et la proportion totale de résine de mélamine, résine polyester et polyacrylate allant de 1 à 80 % en poids, par rapport à la teneur en matière sèche de la dispersion de polyuréthanne.

17. Utilisation selon la revendication 16, caractérisée en ce que la proportion de résine de mélamine, résine polyester et polyacrylate va de 20 à 60 % en poids, par rapport à la teneur en matière sèche de la dispersion de polyuréthanne.

18. Utilisation selon les revendications 11 à 13, caractérisée en ce que la composition de revêtement contient, en tant que composant de type liant supplémentaire, un polyisocyanate bloqué, conjointement avec une résine polyester pouvant être diluée à l'eau et/ou une résine polyacrylate pouvant être diluée à l'eau, la proportion de polyisocyanate, résine polyester et/ou résine polyacrylate allant au total de 1 à 80 % en poids, par rapport à la teneur en matière sèche de la dispersion de polyuréthanne.

19. Utilisation selon les revendications 11 à 18, caractérisée en ce que la composition de revêtement contient de 0,5 à 25 % en poids de pigments métalliques, par rapport à la teneur totale en matière sèche des liants.
